# EUROPEAN PATENT APPLICATION

(11) **EP 2 448 193 A1**
(43) Date of publication of application: **02.05.2012**
(21) Application number: 10801883.9
(22) Date of filing: 17.05.2010
(51) Int. Cl.: H04L 12/56

(54) **METHOD, APPARATUS AND SYSTEM FOR TRANSMITTING AND PROCESSING ASYNCHRONOUS TRANSFER MODE CELLS**

(30) Priority: 24.07.2009 CN 200910089855
(71) Applicant: ZTE Corporation, Shenzhen, Guangdong 518057 (CN)
(72) Inventor: YE, Yuxu, Shenzhen Guangdong518057 (CN); YUAN, Liquan, Shenzhen Guangdong 518057 (CN)
(74) Representative: Hutchinson, Glenn Stanley
(86) International application number: PCT/CN2010/072857
(87) International publication number: WO 2011/009323

(57) **Abstract**

The present disclosure provides a method, an apparatus and a system for transmitting Asynchronous Transfer Mode (ATM) cells. In the scheme of the present disclosure, a plurality of ATM cells are carried in a single fragment by a LINK-PHY interface sending end. Specifically, the plurality of ATM cells are placed in one fragment, length information of an ATM cell group is written in the encapsulation overhead of the fragment, and the fragment is processed and transmitted. In the scheme of the present disclosure, the plurality of ATM cells are transmitted via the single fragment of a LINK-PHY interface, thus greatly increasing the payload transmission efficiency and the actually effective bandwidth of the LINK-PHY interface, and reducing the transmission delay of the whole data. As the length of an ATM cell is fixed, a LINK-PHY interface receiving end can determine the number of the ATM cells contained in a received fragment according to the length information of the ATM cell group in the encapsulation overhead of the fragment, thus the data in the fragment can be recovered to a plurality of ATM cells representing upper layer services in a simple and practical way.

## Description

### TECHNICAL FIELD

The present disclosure relates to data communication technologies and particularly to a method, an apparatus and a system for transmitting and processing Asynchronous Transfer Mode (ATM) cells.

### BACKGROUND

Currently, a Link layer device to Physical layer device (LINK-PHY) interface, such as an ITU-T G.999.1 interface, is mainly used to upward connect various Digital Subscriber Lines (xDSL) in a broadband Access Node (AN) device. AN devices include DSL Access Multiplexer (DSLAM) and Multiple Dwelling Unit (MDU) and the like; xDSLs include Very-high-speed Digital Subscriber Line (VDSL/2), Asymmetric Digital Subscriber Line (ADSL/2/2+), Single-pair High-speed Digital Subscriber Line (SHDSL) and the like. As different DSL-PHYs adopt different transmission modes, for instance, typically, ADSL or SHDSL adopts ATM, and VDSL adopts Packet Transfer Mode (PTM), therefore, a LINK-PHY interface needs to be supportive to both the transmission of an ATM cell and the transmission of an Ethernet frame.

In order to reduce the cache space needed for transmission and receiving, as well as the cache time and the transmission delay of a short Ethernet frame, the LINK-PHY interface adopts the mechanism of transmitting fragments and receiving by rearrangements for a long Ethernet frame.

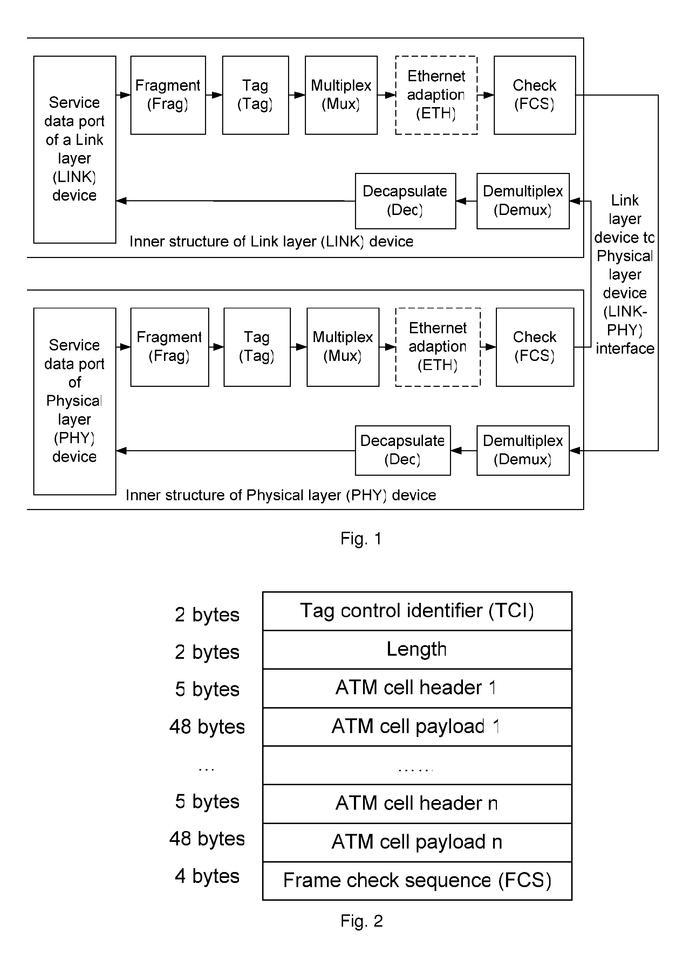

Fig. 1 is a schematic diagram illustrating the structure of a reference model of a prior art LINK-PHY interface. As shown in Fig. 1, the mechanism of transmitting fragments and receiving by rearrangements involves fragment, tagging, multiplexing, Ethernet Adaption, checking, de-multiplexing and decapsulation, etc. wherein Ethernet adaption is optional. An ATM cell from a PHY device of an ADSL/2/2+ or SHDSL and an Ethernet frame from a PHY device of a VDSL2, as Service Data Unit (SDU) from an upper layer protocol, are transmitted by a fragment or a fragment group of a LINK-PHY interface.

In a case where no Ethernet adaption is performed, a fragment header overhead of 2 or 4 bytes and a fragment tail overhead of a 4-byte check code are introduced during the fragment processing in order to guarantee the effective transmission of various types of data. In a case where Ethernet adaption is performed, a 14-byte Ethernet frame header overhead should be further introduced.

In the mechanism of transmitting fragments of a LINK-PHY interface as described above, the length of each fragment should be shorter than the maximum fragment size of the LINK-PHY interface, which can be preset and generally vary in a relatively wide range, for example, a range of below 2047 bytes. High payload transmission efficiency can be achieved if the maximum fragment size is taken full advantage of to transmit ATM cells, however, no related solution has been provided yet.

### SUMMARY

In view of the problem above, it is the main object of the present disclosure to provide a method, an apparatus and a system for transmitting and processing Asynchronous Transfer Mode (ATM) cells to achieve a higher payload transmission efficiency and an actually effective interface bandwidth.

In order to solve the technical problems descried above, the technical scheme of the present disclosure is described as follows.

A method for transmitting an ATM cell comprises: carrying, by a LINK-PHY interface sending end, a plurality of ATM cells in a single fragment.

The process of carrying the plurality of ATM cells in the single fragment may comprise: placing the plurality of ATM cells representing upper layer services in one fragment, writing length information of an ATM cell group in an encapsulation overhead of the fragment, and processing and transmitting the fragment.

The process of placing the plurality of ATM cells in one fragment may comprise: extracting the ATM cells in a sender-cache sent from an upper layer data port according to a maximum fragment size of the LINK-PHY interface, and placing the ATM cells in one fragment.

The process of placing the plurality of ATM cells in one fragment may comprise: the number of the ATM cells contained in a current fragment is not more than a maximum ATM cell number, and the maximum ATM cell number is defined as the maximum number of the ATM cells that can be contained in a single fragment which has the maximum fragment size of the LINK-PHY interface.

The length information of the ATM cell group may refer to the number of the ATM cells contained in the current fragment, or a total length of the ATM cell group contained in the current fragment, or a total payload length of the ATM cell group contained in the current fragment.

A method for processing an ATM cell comprises: recovering, by a LINK-PHY interface receiving end, data of a plurality of ATM cells contained in a received single fragment to ATM cells representing upper layer services.

The process of recovering the data in the received single fragment to the ATM cells may comprise: based on that a length of each ATM cell is fixed, determining the number of the ATM cells contained in the received fragment according to length information of an ATM cell group in an encapsulation overhead of the fragment, recovering the data in the fragment to the ATM cells representing upper layer services, and placing the recovered cells in a receiver-cache.

An apparatus for transmitting an ATM cell comprises:
a fragment determination unit configured to extract ATM cells and placing a plurality of the ATM cells in a single fragment;
and a fragment processing and sending unit configured to encapsulate and transmit the fragment containing the plurality of ATM cells.

The fragment determination unit may comprise:
a cell extraction unit configured to extract the ATM cells and placing the plurality of ATM cells in one fragment;
and a length filling unit configured to write length information of an ATM cell group into an encapsulation overhead of the fragment.

An apparatus for processing an ATM cell comprises:
a fragment receiving and processing unit configured to decapsulate a received fragment containing a plurality of ATM cells;
and a fragment analysis unit configured to recover data of the plurality of ATM cells contained in the received single fragment to ATM cells representing upper layer services.

The fragment analysis unit may comprise:
a length analysis unit configured to determine the number of the ATM cells contained in the received fragment according to length information contained in the fragment;
and a cell recovery unit configured to recover the data of the plurality of ATM cells contained in the fragment to the ATM cells representing upper layer services according to the determined number of the ATM cells contained in the fragment.

A system for transmitting an ATM cell comprises:
a LINK-PHY interface sending end configured to carry a plurality of ATM cells in a single fragment;
and a LINK-PHY interface receiving end configured to recover data of the plurality of ATM cells contained in a received single fragment to ATM cells representing upper layer services.

In the present disclosure, a plurality of ATM cells are transmitted in a single fragment of a LINK-PHY interface, thus significantly increasing the payload transmission efficiency, furthermore, remarkably enhancing the actually effective bandwidth of the LINK-PHY interface, and reducing the transmission delay of the whole data.

As the length of an ATM cell is fixed, the number of the ATM cells contained in a received fragment can be determined by a LINK-PHY interface receiving end according to the length information of an ATM cell group in the encapsulation overhead of the fragment, thus the data in the fragment can be recovered to a plurality of ATM cells representing upper layer services in a simple and practical way.

### BRIEF DESCRIPTION OF THE DRAWINGS

Fig. 1 is a schematic diagram illustrating the structure of a reference model of an existing LINK-PHY interface;
Fig. 2 is a schematic diagram illustrating the data structure of a fragment encapsulation in a case where no Ethernet adaption is performed according to the present disclosure;
Fig. 3 is a schematic diagram illustrating the relation between the number of the ATM cells contained in one fragment and the payload transmission efficiency of the fragment in a case where no Ethernet adaption is performed according to the present disclosure;
Fig. 4 is a schematic diagram illustrating the data structure of a fragment encapsulation in a case where Ethernet adaption is performed according to the present disclosure;
Fig. 5 is a schematic diagram illustrating the relation between the number of the ATM cells contained in one fragment and the payload transmission efficiency of the fragment in a case where Ethernet adaption is performed according to the present disclosure; and
Fig. 6 is a schematic diagram illustrating the structure of an apparatus for transmitting and processing ATM cells of the present disclosure.

### DETAILED DESCRIPTION

In the mechanism of transmitting fragments of a LINK-PHY interface, the length of each fragment should be shorter than the maximum fragment size of the LINK-PHY interface, wherein the maximum fragment size can be preset and vary in a relatively wide range, for example, a range of below 2047 bytes. As the length of an Ethernet frame to be transmitted is variable, when a sum of the length of an Ethernet frame to be transmitted and the length of a selected encapsulation overhead is beyond the maximum fragment size, both communicating parties of an LINK-PHY interface, that is, the LINK device and the PHY device shown in Fig. 1, need to transmit data via a plurality of fragments.

During a data transmission, the length of a single ATM cell is fixed to be 53 bytes, which is shorter than the minimum length of an effective Ethernet frame of 64 bytes. In order to guarantee the integrity of a short packet transmission in the LINK-PHY interface without increasing design complexity, the maximum fragment size configured for the LINK-PHY interface may be far longer than the sum of the length of a single ATM cell and the length of the encapsulation overhead of a fragment.

As the length of the encapsulation overhead of a fragment is essentially fixed, the payload transmission efficiency will be severely reduced if only one ATM cell is transmitted in a single fragment by a LINK-PHY interface, whereas the payload transmission efficiency will be significantly increased if a plurality of ATM cells are transmitted in a single fragment. The payload transmission efficiency is the ratio of the total payload length of the ATM cells in a fragment to the total length of the fragment.

Based on the description above, in the present disclosure, a plurality of ATM cells are carried in a single fragment by a LINK-PHY interface sending end, that is, a plurality of ATM cells representing upper layer services are placed in one fragment, the length information of an ATM cell group is written in the encapsulation overhead of the fragment, and then the fragment is processed and transmitted. The ATM cell group is defined as the plurality of ATM cells contained in the single fragment.

The LINK-PHY interface receiving end recovers the data of the plurality of ATM cells contained in the received fragment to ATM cells representing upper layer services. As the length of each ATM cell is fixed, the LINK-PHY interface receiving end can determine the number of the ATM cells contained in the received fragment according to the length information of the ATM cell group in the encapsulation overhead of the fragment, thus the data in the fragment can be recovered to ATM cells representing upper layer services. Specifically, the process of placing of the plurality of ATM cells in one fragment comprises: the LINK-PHY interface sending end, for example, the fragment module in a LINK or PHY device, extracts the ATM cells in the sender-cache of the PHY or LINK device received from an upper layer service data port according to the maximum fragment size of the LINK-PHY interface and orderly places the extracted ATM cells in the one fragment.

When there are a great number of ATM cells to be transmitted in the sender-cache of the LINK-PHY interface sending end, the ATM cells are typically transmitted via fragments in the maximum fragment size which satisfies a limit condition, that is, as many ATM cells are contained in a fragment as possible as long as the length of the fragment is shorter than the preset maximum fragment size. The ATM cells can also be transmitted via shorter fragments if there are not so many ATM cells to be transmitted in the sender-cache.

The LINK-PHY interface sending end may extract a plurality of ATM cells and place them in one fragment when a great number of ATM cells are cached in the sender-cache such that the transmitted fragments have the maximum fragment size of the LINK-PHY interface and contain as many ATM cells as possible. Also, the LINK-PHY interface sending end may extract ATM cells when there are not many or even few ATM cells cached in the sender-cache so as to meet the real-time requirement of service data.

The length information of an ATM cell group written in the encapsulation overhead of the fragment can be the number of ATM cells, that is, the number of the ATM cells contained in the current fragment; or can be the total length of an ATM cell group, that is, the total length of the ATM cell group contained in the current fragment, which is a sum of the length of the ATM cells contained in the current fragment; or can be the total payload length of an ATM cell group, that is, the total payload length of all the ATM cells contained in the current fragment, namely, the sum of the payload lengths of the ATM cells contained in the current fragment. The expression form of the length information of an ATM cell group can be predefined through negotiation by the LINK-PHY interface sending end and the LINK-PHY interface receiving end, or can be directly configured in the LINK-PHY interface sending end and the LINK-PHY interface receiving end, if only the expression forms at the two ends are kept identical.

Processing and transmitting the fragment specifically comprises: performing tagging, multiplexing, Ethernet adaption (optional), checking and the like to the fragment, to generate a fragment in a standard encapsulation format, and then sending the generated fragment to the LINK-PHY interface.

Specifically, receiving and processing the fragment specifically comprises decapsulating the fragment. Based on each ATM cell has a fixed length, the LINK-PHY interface receiving end, for example, a decapsulating module in a PHY or LINK device, determines the number of the ATM cells contained in the currently received fragment according to the length information of the ATM cell group in the received fragment, decapsulates the fragment to recover the data of the ATM cells contained in the fragment to ATM cells representing upper layer services, and placing the ATM cells in the receiver-cache of the PHY or LINK device.

The specific implementation of the present disclosure is described in detail below with reference to an embodiment in which Ethernet adaption is performed and an embodiment in which no Ethernet adaption is performed.

A reference model of a LINK-PHY interface is shown in Fig. 1. A LINK-PHY interface sending end, for example, a fragment module in a LINK or PHY device, extracts the ATM cells in a sender-cache sent from an upper layer service data port according to the preset Maximum Fragment Size (TX_MFS) of the LINK-PHY interface, and orderly places the extracted ATM cells in one fragment.

### No Ethernet adaption is performed

In a case where no Ethernet adaption is performed, the encapsulation of a fragment can employ the data structure shown in Fig. 2, in which the length information of an ATM cell group is contained in a length domain to inform the number of the ATM cells contained in a received single fragment to a LINK-PHY interface receiving end. The fixed length of an ATM cell is 53 bytes, wherein the ATM cell header occupies 5 bytes, and the payload of an ATM cell occupies 48 bytes. If there are n ATM cells contained in the current fragment, "n"can be filled in the length domain, which is the number of the ATM cells contained in the current fragment; or "53xn" can be filled in the length domain, which is the total length of an ATM cell group contained in the current fragment, that is, the sum of the lengths of the n ATM cells contained in the current fragment; or "48xn" can be filled in the length domain, which is the total payload length of the ATM cells contained in the current fragment, that is, the sum of the payload lengths of the n ATM cells contained in the current fragment.

If there are a great number of ATM cells to be transmitted in the sender-cache, fragments are generally transmitted in the maximum fragment size meeting the following condition: N×53+8≤TX_MFS<(N+1)×53+8, wherein N is the maximum number of the ATM cell contained in a fragment which meets the TX_MFS, and in this case, n=N. The ATM cells can be transmitted via shorter fragments, namely n<N, if there are not many ATM cells to be transmitted in the sender-cache.

A LINK-PHY interface receiving end, for example, the decapsulating module in a PHY or LINK device, orderly recovers the data of the plurality of ATM cells contained in the fragment to n ATM cells (that is, an ATM cell group) representing upper layer services according to the indication of the length domain in the fragment, and places the ATM cells in a receiver-cache. If the value of the length domain is n, the number of ATM cells can be directly determined to be n; if the value of the length domain is the total length of an ATM cell group contained in the current fragment, the number n of the ATM cells can be calculated by dividing the total length of the ATM cell group by 53; if the value of the length domain is the total payload length of an ATM cell group contained in the current fragment, the number n of the ATM cells can be calculated by dividing the total payload length of the ATM cell group by 48. In this case, the payload transmission efficiency should be n×48/(4+n×53+4). The payload transmission efficiency is the ratio of the total payload length of the ATM cells in a fragment to the total length of the fragment.

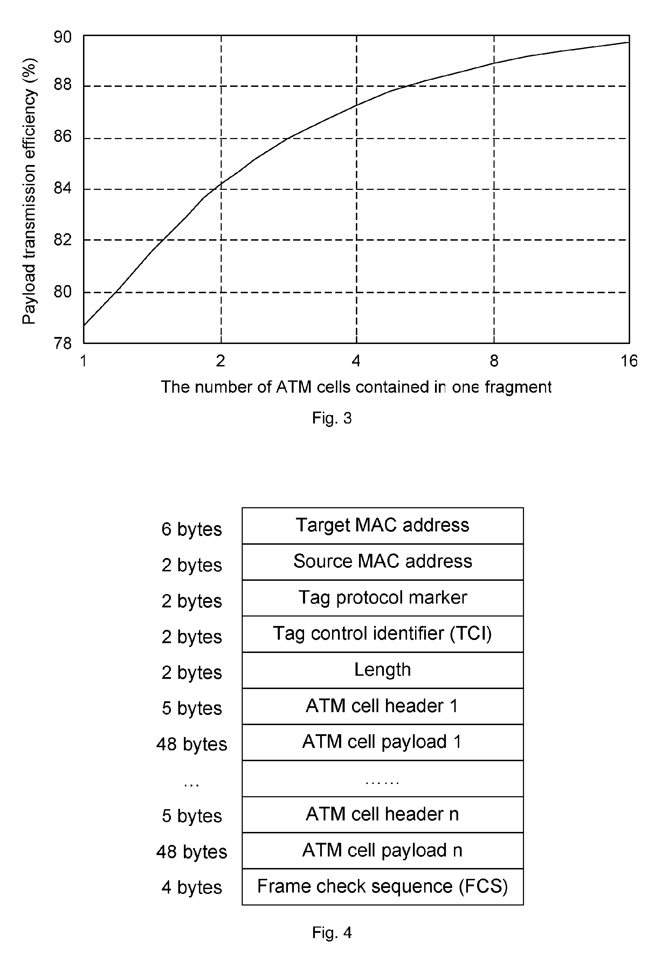

In a case where no Ethernet adaption is performed, when one ATM cell is transmitted as the data of a fragment, the payload transmission efficiency is 48/(53+8)=78.9%. It is shown in Fig. 3 which illustrates the relation between the number of the ATM cells contained in one fragment and the payload transmission efficiency of the fragment that the payload transmission efficiency is increased by about 10% as the number of the ATM cells contained in one fragment increases, that is, the actually effective bandwidth of the LINK-PHY interface is increased by about 10%.

### Ethernet adaption is performed

In a case where Ethernet adaption is performed, the encapsulation of a fragment can adopt the data structure shown in Fig. 4, in which the length information of an ATM cell group is contained in a length domain to inform the number of the ATM cells contained in a received single fragment to a LINK-PHY interface receiving end. If there are n ATM cells contained in the current fragment, then "n" can be filled in the length domain, which is the number of the ATM cells contained in the current fragment; or "53×n" can be filled in the length domain, which is the total length of the cells in an ATM cell group contained in the current fragment, that is, the sum of the lengths of the n ATM cells contained in the current fragment; or "48xn" can be filled in the length domain, which is the total payload length of the ATM cell group contained in the current fragment, that is, the sum of the payload lengths of the n ATM cells contained in the current fragment.

If there are a great number of ATM cells to be transmitted in the sender-cache, fragments are generally transmitted in the maximum fragment size meeting the following condition: N×53+22≤TX_MFS<(N+1)×53+22, wherein N is the maximum number of the ATM cells in a fragment which meets the TX_MFS, and in this case, n=N. The ATM cells can be transmitted via shorter fragments, namely n<N, if there are not many ATM cells to be transmitted in the sender-cache.

A LINK-PHY interface receiving end, for example, a decapsulating module in a PHY or LINK device, orderly recovers the data in the ATM cells contained in the fragment to n ATM cells (that is, an ATM cell group) representing upper layer services according to an indication of the length domain in the fragment and places the ATM cells in a receiver-cache. If the value of the length domain is n, the number of ATM cells can be directly determined to be n; if the value of the length domain is the total length of an ATM cell group contained in the current fragment, the number n of the ATM cells can be calculated by dividing the total length of the ATM cell group by 53; if the value of the length domain is the total payload length of the ATM cell group contained in the current fragment, the number n of the ATM cells can be calculated by dividing the total payload length of the ATM cell group by 48. In this case, the payload transmission efficiency should be: nx48/(14+4+nx53+4).

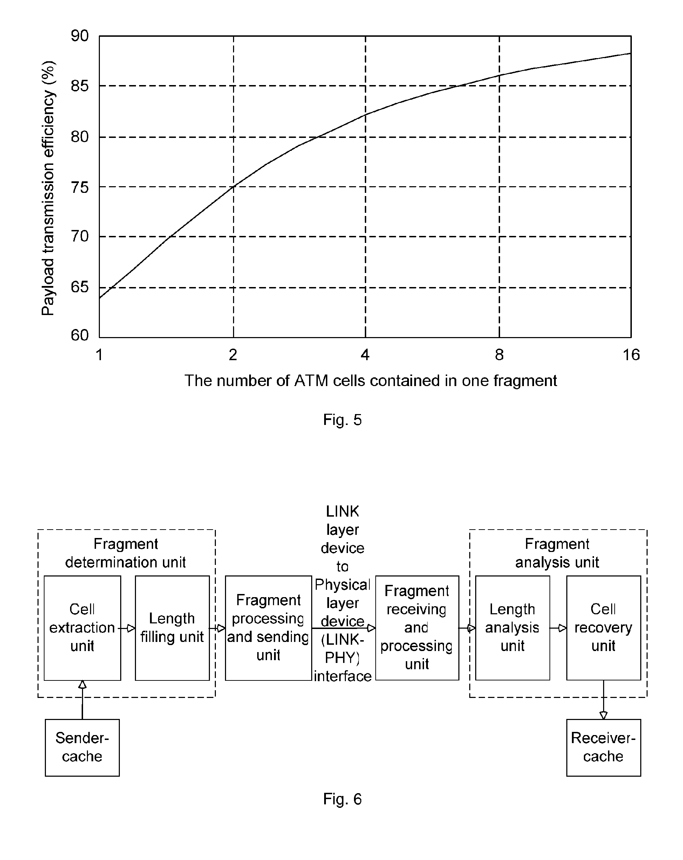

In a case where Ethernet adaption is performed, when one ATM cell is transmitted as the data of a fragment, the payload transmission efficiency is 48/(53+22)=64%. It is shown in Fig. 5 which illustrates the relation between the number of the ATM cells contained in one fragment and the payload transmission efficiency of the fragment that the payload transmission efficiency is increased by about 20% as the number of the ATM cells contained in the fragment increases, that is, the actually effective bandwidth of the LINK-PHY interface is increased by about 20%.

Fig. 6 is a schematic diagram illustrating the structure of an apparatus for transmitting and processing ATM cells provided herein. As shown in Fig. 6, the apparatus comprises, at a LINK-PHY interface sending end: a sender-cache, a fragment determination unit and a fragment processing and sending unit, wherein the sender-cache is configured to cache the ATM cells to be transmitted by the LINK-PHY interface sending end; the fragment determination unit is configured to extract ATM cells from the cache and placing a plurality of the ATM cells in a single fragment; and the fragment processing and sending unit is configured to encapsulate and transmit the fragments containing a plurality of ATM cells.

The fragment determination unit comprises: a cell extraction unit and a length filling unit, wherein the cell extraction unit is configured to extract the cached ATM cells and placing a plurality of ATM cells in one fragment, and the length filling unit is configured to write the length information of an ATM cell group in the encapsulation overhead of a fragment.

In the apparatus, the cell extraction unit and the length filling unit are located in a fragment module at the LINK-PHY interface sending end, and the fragment processing and sending unit comprises a tagging module, a multiplexing module and a checking module, and optionally further comprises an Ethernet adaption module at the LINK-PHY interface sending end. The specific way of their connection is shown in Fig. 1.

In addition, at the LINK-PHY interface receiving end, the apparatus comprises: a fragment receiving and processing unit, a fragment analysis unit and a receiver-cache, wherein the fragment receiving and processing unit is configured to decapsulate a received fragment containing a plurality of ATM cells; the fragment analysis unit is configured to recover the data of the plurality of ATM cells contained in the received fragment to ATM cells representing upper layer service; and the receiver-cache is configured to cache the ATM cells received by the LINK-PHY interface receiving end.

In the apparatus, the fragment analysis unit comprises a length analysis unit and a cell recovery unit, wherein the length analysis unit is configured to determine the number of the ATM cells contained in a received fragment according to the length information in the fragment; and the cell recovery unit is configured to recover the data in the fragment to ATM cells representing upper layer services according to the determined ATM cell number contained in the fragment.

In the apparatus, the fragment receiving and processing unit is located in the de-multiplexing module and the decapsulating module at the LINK-PHY interface receiving end, and the length analysis unit and the cell recovery unit are located in the decapsulating module at the LINK-PHY interface receiving end. The specific way of their connection is shown in Fig. 1.

A system for transmitting ATM cells provided in the present disclosure comprises: a LINK-PHY interface sending end and a LINK-PHY interface receiving end, wherein the LINK-PHY interface sending end is configured to carry a plurality of ATM cells in a single fragment, that is, to place a plurality of ATM cells in one fragment, and write the length information of an ATM cell group in the encapsulation overhead of the fragment, and encapsulate and send the fragment to the LINK-PHY interface receiving end; and the LINK-PHY interface receiving end is configured to recover the data of the ATM cells contained in the received fragment to ATM cells representing upper layer services, decapsulate the received fragment and determine the number of the ATM cells contained in the received fragment based on the length of each ATM cell is fixed according to the length information of the ATM cell group contained in the encapsulation overhead of the fragment, and orderly recover the data in the fragment to ATM cells representing upper layer services.

The above-mentioned are only preferred embodiments of the present disclosure, whereas they are in no way to limit the protection scope of the present disclosure.

## Claims

1. A method for transmitting an Asynchronous Transfer Mode (ATM) cell, comprising: carrying, by an LINK-PHY interface sending end, a plurality of ATM cells in a single fragment.

2. The method according to claim 1, wherein the process of carrying the plurality of ATM cells in the single fragment comprises: placing the plurality of ATM cells representing upper layer services in one fragment, writing length information of an ATM cell group in an encapsulation overhead of the fragment, and processing and transmitting the fragment.

3. The method according to claim 2, wherein the process of placing the plurality of ATM cells in one fragment comprises: extracting the ATM cells in a sender-cache sent from an upper layer data port according to a maximum fragment size of the LINK-PHY interface, and placing the extracted ATM cells in one fragment.

4. The method according to claim 3, wherein the process of placing the plurality of ATM cells in one fragment comprises: the number of the ATM cells contained in a current fragment is not more than a maximum number of ATM cell, and the maximum number of ATM cell is defined as the maximum number of the ATM cells that can be contained in a single fragment which has the maximum fragment size of the LINK-PHY interface.

5. The method according to claim 2, wherein the length information of the ATM cell group refers to the number of the ATM cells contained in the current fragment, or a total length of the ATM cell group contained in the current fragment, or a total payload length of the ATM cell group contained in the current fragment.

6. The method according to any one of claims 1-5, further comprising: recovering, by a LINK-PHY interface receiving end, data of the plurality of ATM cells contained in the received single fragment to ATM cells representing upper layer services after processing and transmitting the fragment.

7. The method according to claim 6, wherein the process of recovering the data in the received single fragment to ATM cells comprises: determining the number of the ATM cells contained in the received fragment according to the length information of the ATM cell group contained in the encapsulation overhead of the fragment based on that a length of each ATM cell is fixed, recovering the data of the plurality of ATM cells contained in the fragment to ATM cells representing upper layer services, and placing the recovered cells in a receiver-cache.

8. A method for processing an Asynchronous Transfer Mode (ATM) cell, comprising: recovering, by the LINK-PHY interface receiving end, data of a plurality of ATM cells contained in a received single fragment to ATM cells representing upper layer services.

9. The method according to claim 8, wherein the process of recovering the data in the received single fragment to ATM cells comprises: determining the number of the ATM cells contained in the received fragment according to length information of an ATM cell group in an encapsulation overhead of the fragment based on that a length of each ATM cell is fixed, recovering the data in the fragment to the ATM cells representing upper layer services, and placing the recovered cells in a receiver-cache.

10. An apparatus for transmitting an Asynchronous Transfer Mode (ATM) cell, comprising:
a fragment determination unit configured to extract ATM cells and placing a plurality of ATM cells in a single fragment;
and a fragment processing and sending unit configured to encapsulate and transmit the fragment containing the plurality of ATM cells.

11. The apparatus according to claim 10, wherein the fragment determination unit comprises:
a cell extraction unit configured to extract the ATM cells and placing the plurality of ATM cells in one fragment;
and a length filling unit configured to write length information of the ATM cell group into an encapsulation overhead of the fragment.

12. An apparatus for processing an Asynchronous Transfer Mode (ATM) cell, comprising:
a fragment receiving and processing unit configured to decapsulate a received fragment containing a plurality of ATM cells;
and a fragment analysis unit configured to recover data of the plurality of ATM cells contained in the received single fragment to ATM cells representing upper layer services.

13. The apparatus according to claim 12, wherein the fragment analysis unit comprises:
a length analysis unit configured to determine the number of the ATM cells contained in the received fragment according to length information contained in the fragment;
and a cell recovery unit configured to recover the data of the plurality of ATM cells contained in the fragment to the ATM cells representing upper layer services according to the determined number of the ATM cells contained in the fragment.

14. A system for transmitting an Asynchronous Transfer Mode (ATM) cell, comprising:
a LINK-PHY interface sending end configured to carry a plurality of ATM cells in a single fragment;
and a LINK-PHY interface receiving end configured to recover data of the plurality of ATM cells contained in a received single fragment to ATM cells representing upper layer services.
